# EUROPEAN PATENT APPLICATION

(11) **EP 2 061 107 A1**
(43) Date of publication of application: **20.05.2009**
(21) Application number: 07768280.5
(22) Date of filing: 06.07.2007
(51) Int. Cl.: H01M 4/58, C01B 31/04

(54) **CARBON MATERIAL FOR NEGATIVE ELECTRODE FOR LITHIUM ION RECHARGEABLE BATTERY, CARBON MATERIAL FOR NEGATIVE ELECTRODE FOR LOW CRYSTALLINE CARBON-IMPREGNATED LITHIUM ION RECHARGEABLE BATTERY, NEGATIVE ELECTRODE PLATE, AND LITHIUM ION RECHARGEABLE BATTERY**

(30) Priority: 31.08.2006 JP 2006235615
(71) Applicant: TOYO TANSO CO., LTD., Osaka-shi, Osaka 555-0011 (JP)
(72) Inventor: OHTA, Naoto, Kanonji-shi Kagawa 769-1612 (JP); HOSHI, Kazuhito, Kanonji-shi Kagawa 769-1612 (JP); BITO, Shingo, Kanonji-shi Kagawa 769-1612 (JP); YAMANAKA, Akio, Kanonji-shi Kagawa 769-1612 (JP); OKUNI, Tomoyuki, Kanonji-shi Kagawa 769-1612 (JP)
(74) Representative: TBK-Patent
(86) International application number: PCT/JP2007/063548
(87) International publication number: WO 2008/026380

(57) **Abstract**

There is obtained a carbon material for lithium-ion secondary battery negative electrode, a low-crystalline carbon impregnated carbon material for lithium-ion secondary battery negative electrode, a negative electrode plate, and a lithium-ion secondary battery, each of which realizes a first charge/discharge cycle with less gas generation and provides a rapid charge/discharge. The carbon material is obtained by: blending and kneading a carbonaceous aggregate with a binder to form a composition; press molding the composition into an article; carbonizing the press molded article; graphitizing the article to obtain an artificial graphite block; milling the block; and carrying out particle size control. The carbon material has characteristics of: (1) R-value = (I₁₃₆₀/I₁₅₈₀) ≥ 0.2, where R-value is defined by the ratio of D band to G band in Raman spectrum using Nd: YAG laser light of 532 nm wavelength; and (2) d(002) ≥ 0.336nm, and Lc(002) ≤ 50 nm, where d(002) and Lc(002) are crystallographic parameters calculated by Gakushin-method. The carbon material is used for the negative electrode plate of a lithium-ion secondary battery, and used in the lithium-ion secondary battery having therein the negative electrode plate.

## Description

### Technical Field

The present invention relates to a carbon material for lithium-ion secondary battery negative electrode, low-crystalline carbon impregnated carbon material for lithium-ion secondary battery negative electrode, negative electrode plate, and lithium-ion secondary battery.

### Background Art

A carbon material for lithium-ion secondary battery negative electrode, negative electrode plate, lithium-ion secondary battery and the like have been already known, for example, as is disclosed in the below-mentioned patent document 1. The patent document 1 discloses a nonaqueous electrolyte secondary battery including: a positive electrode containing lithium; a negative electrode made of a carbonaceous material; and a nonaqueous lithium-ion conductive electrolyte, the negative electrode being made of carbonaceous powder prepared by milling high-density isotropic molded graphite obtained from two main starting materials of an aggregate and a binding material.

Patent Document 1: Japanese Unexamined Patent Publication No. 335216/1995 (Tokukaihei 07-335216)

### Disclosure of the Invention

### Problems to be Solved by the Invention

The patent document 1 discloses that, to mold raw material particles mainly containing two components that is an aggregate and a binding material, the use of cold isostatic pressing as a molding technique allows the raw material particles to be isotropically oriented in the molded article. This is because using this technique makes it possible to apply pressure to the raw material particles isotropically from all directions, unlike the case of uniaxial press molding device for extrusion molding for example, in which pressure is applied from a constant direction only. The molded article prepared using the cold isostatic pressing is then carbonized and graphitized to form high-density isotropic molded graphite. This molded graphite is milled to obtain carbonaceous powder, which can be used as a carbon material for a lithium-ion secondary battery negative electrode.

The patent document 1 also discloses that, when the carbonaceous powder, which is obtained by milling the high-density isotropic molded graphite, has crystals with interlayer distance d(002) of 0.34 nm or less, a resulting lithium-ion secondary battery has high gravimetric and volumetric energy densities. However, such a lithium-ion secondary battery does not always suit a rapid charge/discharge. Furthermore, along with the reduction in interlayer distance d(002), crystal structure is developed. This may cause a problem of generating gas at a first charge/discharge cycle with the use of a certain type of electrolytic solution (e.g., propylene carbonate).

Therefore, an object of the present invention is to provide a carbon material for lithium-ion secondary battery negative electrode, a low-crystalline carbon impregnated carbon material for lithium-ion secondary battery negative electrode, a negative electrode plate, and a lithium-ion secondary battery, each of which realizes a first charge/discharge cycle with less gas generation and provides a rapid charge/discharge.

### Means for Solving the Problems

A carbon material for lithium-ion secondary battery negative electrode of the present invention is obtained by: blending and kneading a carbonaceous aggregate with a binder to form a composition; press molding the composition into an article; carbonizing the press molded article; graphitizing the article to obtain an artificial graphite block; milling the block; and carrying out particle size control. The carbon material has characteristics of: (1) R-value = (I₁₃₆₀/I₁₅₈₀) ≥ 0.2, where R-value is defined by the ratio of D band to G band in Raman spectrum using Nd: YAG laser light of 532 nm wavelength; and (2) d(002) ≥ 0.336nm, and Lc(002) ≤ 50 nm, where d(002) and Lc(002) are crystallographic parameters calculated by Gakushin-method.

Preferably, in the preparation of the carbon material of the present invention, an amount of the binder is 50 w/t parts or more with respect to 100 w/t parts of carbonaceous aggregate.

In the preparation of the carbon material of the present invention, it is preferable that the press molded article is obtained through cold isostatic pressing, because of the following reason. With a uniaxial press molding deice for extrusion molding for example, raw material particles are selectively oriented in a direction perpendicular to a pressure direction since pressure is applied only from a constant direction. Thus, molded graphite prepared by carbonizing and graphitizing an article molded using the uniaxial press molding has a texture showing strong optical anisotropy. Therefore, if graphite powder obtained by milling the molded graphite is used to produce an electrode, the electrode has crystallites oriented in a constant direction. This limits the insertion/extraction direction of lithium ion to a constant direction, providing a poor rapid charge/discharge performance. On the other hand, the use of the cold isostatic pressing as a molding technique allows the raw material particles in the molded article to be isotropically oriented because pressure is applied to the raw material particles from all directions. Molded graphite prepared by carbonizing and graphitizing the thus molded article has a texture showing optical isotropy. Therefore, when graphite powder obtained by milling the molded graphite is used to produce an electrode, the electrode has crystallites randomly oriented. This enables lithium ion to be inserted/extracted from/to all directions, leading to improvement in the rapid charge/discharge performance.

Preferably, the carbon material of the present invention does not contain a compound which catalyzes graphitization. If an article containing a compound which catalyzes graphitization is heat treated, it is more likely that the crystals of a resulting carbon material are developed, compared with the case where an article not containing such a compound is heat treated. This development increases discharge capacity of the resulting lithium-ion secondary battery. However, the contained compound, which acts as a catalyst for graphitization, may remain as an impurity in the negative electrode carbon material. This requires an additional process for removing the remainder, causing the production process to be complicated.

Preferably, the carbon material of the present invention has a mesopore volume of 0.03 mL/g or less, which mesopore is defined by IUPAC (International Union of Pure and Applied Chemistry) and obtained by analyzing a nitrogen adsorption-desorption isotherm at 77K using BJH method. A mesopore volume of 0.03 mL/g or less shows a tendency to reduce side reactions with an electrolyte. Note that the BJH (Barrett-Joyner-Halenda) method is a technique for analyzing pores with an assumption that the pores have cylindrical forms, in such a manner that an integrated value of surface areas of the pores takes a closest value to the BET specific surface area according to BET (Brunauer-Emmett-Teller) method.

In the preparation of the carbon material of the present invention, it is preferable that the carbonaceous aggregate contains coal-based calcined coke, petroleum-based calcined coke, or raw coke. These aggregates are stably supplied, and low-cost compared to other carbonaceous aggregates. Preferably, the coal-based calcined coke is constituted of plural types of coal-based calcined coke, the petroleum-based calcined coke is constituted of plural types of petroleum-based calcined coke, and the raw coke is constituted of plural types of raw coke. This is because, the use of plural types of coke enables the resulting carbon material to have a crystal structure suitable for designing a battery.

In the preparation of the carbon material of the present invention, it is preferable that the carbonaceous aggregate contains artificial graphite or natural graphite. This simplifies the graphitization process since the artificial graphite or natural graphite contained in the carbonaceous aggregate has crystal structure already developed.

Preferably, the carbon material has an average particle size of 5 µm to 60 µm, and a maximum particle size of 100 µm or less.

Preferably, the carbon material of the present invention has a specific surface area of 20 m²/g or less. If the specific surface area is greater than 20 m²/g, a large amount of binder is needed for producing an electrode, which makes it difficult to produce a homogeneous electrode.

A low-crystalline carbon impregnated carbon material for lithium-ion secondary battery negative electrode of the present invention is obtained by impregnating any one of the above-described carbon materials with a thermoplastic resin so that pores of the material are filled with the resin, and carbonizing the impregnated material. Note that the low-crystalline carbon herein means a carbonized thermoplastic resin.

Preferably, the low-crystalline carbon impregnated carbon material of the present invention has a mesopore volume of 0.029 mL/g or less, which mesopore is defined by IUPAC and obtained by analyzing a nitrogen adsorption-desorption isotherm at 77K using BJH method.

Preferably, the low-crystalline carbon impregnated carbon material of the present invention has characteristics of: (1) R-value = (I₁₃₆₀/I₁₅₈₀) ≥ 0.2, where R-value is defined by the ratio of D band to G band in Raman spectrum using Nd: YAG laser light of 532 nm wavelength; and (2) d(002) ≥ 0.336 nm, and Lc(002) ≤ 50 nm, where d(002) and Lc(002) are crystallographic parameters calculated by Gakushin-method.

A negative electrode plate of the present invention is formed by applying, to a current collector, a mixture of the above-described carbon material and a resin binder. In another aspect, a negative electrode plate of the present invention is formed by applying, to a current collector, a mixture of the above-described low-crystalline carbon impregnated carbon material and a resin binder.

A lithium-ion secondary battery of the present invention includes any one of the above-described negative electrode plates.

### Effects of the Invention

The carbon material for lithium-ion secondary battery negative electrode of the present invention realizes a first charge/discharge cycle with less gas generation and provides a rapid charge/discharge.

The low-crystalline carbon impregnated carbon material for lithium-ion secondary battery negative electrode of the present invention realizes a first charge/discharge cycle with much less gas generation compared with the above carbon material, and also provides a rapid charge/discharge.

The negative electrode plate and the lithium-ion secondary battery of the present invention each includes the carbon material of the present invention or the low-crystalline carbon impregnated carbon material of the present invention. Therefore, the negative electrode plate and the lithium-ion secondary battery have the above-described advantageous effects provided by the carbon material of the present invention or those provided by the low-crystalline carbon impregnated carbon material of the present invention.

### Best Mode for Carrying Out the Invention

The following describes a carbon material for lithium-ion secondary battery negative electrode (hereinafter abbreviated as "negative electrode carbon material") of an embodiment of the present invention.

The negative electrode carbon material of this embodiment is obtained by: blending and kneading a carbonaceous aggregate with a binder so that the amount of binder is 50 w/t parts or more with respect to 100 w/t parts of carbonaceous aggregate, thereby forming a composition; press molding the composition into an article; carbonizing the press molded article; finally graphitizing the article to obtain an artificial graphite block; milling the block; and carrying out particle size control. The obtained carbon material has: R-value = (I₁₃₆₀/I₁₅₈₀) equal to or greater than 0.2, which R-value is defined by the ratio of D band to G band in Raman spectrum using Nd:YAG laser light of 532 nm wavelength; and a specific surface area equal to or smaller than 20 m²/g. In addition, the negative electrode carbon material of this embodiment does not contain a compound which catalyzes graphitization. To be more specific, examples of the graphitization-catalyzing compound includes: metal or nonmetal such as Ti, Si, Fe, Ni, and B; or an oxide or carbide thereof.

As the carbonaceous aggregate, used is powder of: coal-based calcined coke, petroleum-based calcined coke, or raw coke (pitch coke, petroleum-based coke, raw pitch coke, raw petroleum coke, or the like) . The aggregate may be plural types of coal-based calcined coke, plural types of petroleum-based calcined coke, or plural types of raw coke. In addition, it is possible to blend, with the powder, a small amount of: artificial graphite, natural graphite, carbon black, anthracite, crystalline carbon material, or the like.

The carbonaceous aggregate is milled by known methods, i.e., using a jet mill, hammer mill, roller mill, vibration mill, pin mill or the like, either singly or in combination thereof. Preferably, an average particle size after milling is 1 to 20 µm. An average particle size smaller than 1 µm leads to poor yields and low productivity. Meanwhile, the average particle size greater than 20 µm makes it difficult to uniformly knead the carbonaceous aggregate with the binder, resulting in inhomogeneous texture.

The binder may be: coal-based pitch (hard pitch, medium soft pitch, soft pitch) or coal tar; other pitches such as petroleum pitch; synthetic resin; or the like, which may be used either singly or in combination. An amount of binder to be blended with 100 w/t parts of aggregate is 50 w/t parts or more. With this blending, pores of the carbonaceous aggregate are filled with the binder, and the surface of the aggregate is coated, thus enabling fine compounding. Preferably, an amount of the binder is 100 w/t parts or less, and more preferably, 70 w/t parts or less. Less than 50 w/t parts of binder decreases the degree of impregnation of the carbonaceous aggregate with the binder filling the pores, and the degree of coating of the surface of the aggregate. This likely causes reduction in the R-value obtained after graphitization, and such reduction increases the possibility of gas generation when assembled into a battery. More than 100 w/t parts of binder may cause cracking or breaking in a baked molded article, thereby leading to low productivity.

After the carbonaceous aggregate is blended and kneaded with the binder, the resulting mixture is re-milled by a milling device. The type of milling device used is not particularly limited. However, it is preferable that the average particle size of the powder obtained after milling is not more than 50 times that of the carbonaceous aggregate. If the average particle size of the obtained powder exceeds this, a large air cavity is created in the texture of a graphite material. As a result, a dense texture is not obtained.

The thus milled powder is used as a molding material, from which a press molded article is obtained. In the press molding process, it is preferable to use isostatic pressing as a molding technique, in particular, cold isostatic pressing such as rubber press, among various known molding techniques. Molding pressure is not particularly limited; however, is preferably from 500 kgf/cm² to 1500 kgf/cm². A molding pressure equal to or less than 500 kgf/cm² reduces the strength of the molded article. This causes a problem of cracking in a later heat treatment process and leads to low productivity. In addition, such a pressure diminishes the improvement in rapid charge/discharge performance. Meanwhile, a molding pressure equal to or more than 1500 kgf/cm² increases the specific surface area of resulting negative electrode carbon material. As a result, bad coulombic efficiency tends to be presented in a first charge/discharge cycle.

The press molded article is baked and carbonized in a heating furnace under a non-oxidation atmosphere at temperatures up to 1000°C, and then graphitized using a graphitization furnace at high temperatures of 2000°C or higher. The temperature of graphitization is preferably not higher than 2900°C, and more preferably not higher than 2800°C. A temperature higher than 2900°C promotes graphitization even if the binder and the aggregate are compounded, thereby increasing the capacity. However, such a temperature decreases d(002) and the R-value, and increases Lc(002). Because of this, lithium ion may be deposited, in a form of metal, on the surface of the carbon material during a rapid charge. The deposited lithium ion tends to be a factor in capacity drop, degradation due to cycling, or low safety. It is desirable that, in the viewpoint of rapid charge/discharge performance, d(002) is 0.336 nm or more, Lc(002) is 50 nm or less, and R-value is 0.2 or more.

The graphitized molding material is milled, and subjected to particle size control, so that a targeted negative electrode carbon material is obtained. Milling technique used in this process is not particularly defined. Examples of milling technique include impact milling using a jet mill, hammer mill, pin mill, or the like.

The negative electrode carbon material obtained through the milling process has an average particle size of 5 µm to 60 µm, and its specific surface area is 20 m²/g or less. An average particle size smaller than 5 µm not only provides a larger reactive specific surface area, but also causes absorption of the binder into the powder when kneading the material with the binder to form a paste. This leads to a problem in coating property when the paste is applied to copper foil (a current collector). If the average particle size is greater than 60 µm and the maximum particle size is greater than 100 µm, the resulting electrode plate is thick, causing difficulty in electron conductivity.

In this way, the carbonaceous aggregate and the binder are compounded at a specific blend ratio, and graphitization temperature is controlled. With this, crystallinity of powder bulk and crystallinity of particle surface are controlled, and the desired negative electrode carbon material is obtained. To be more specific, the negative electrode carbon material is prepared so as to have the following characteristics: (1) R-value = (I₁₃₆₀/I₁₅₈₀) ≥ 0.2, where R-value is defined by the ratio of D band to G band in Raman spectrum using Nd: YAG laser light of 532 nm wavelength; and (2) d(002) ≥ 0.336 nm, and Lc (002) ≤ 50 nm, where d(002) and Lc(002) are crystallographic parameters calculated by Gakushin-method. With these characteristics, a reaction with an electrolytic solution is restrained. Therefore, an appropriate protective layer (SEI layer) is formed on the surface of the carbon material in a first charge cycle, and it is possible to obtain the negative electrode carbon material having excellent cycling performance and rapid charge/discharge performance. A lithium-ion secondary battery adopting a lithium-ion secondary battery negative electrode made of the negative electrode carbon material generates less gas when charged.

A low-crystalline carbon impregnated carbon material for lithium-ion secondary battery negative electrode ("low-crystalline carbon impregnated carbon material") of the embodiment of the present invention is characterized in that the material is obtained by: impregnating the above-described negative electrode carbon material with a thermoplastic resin so that pores of the material are filled with the resin; and carbonizing the impregnated material. The thermoplastic resin fills the pores of the negative electrode carbon material, particularly fills mesopores defined by IUPAC, and thereby decreases the reaction activity between the material and the electrolytic solution. The thermoplastic resin is, for example, polyvinyl chloride, polyvinyl alcohol, polyvinyl pyrrolidone or the like. For dry blending, it is preferable to blend 10 to100 w/t parts of thermoplastic resin with respect to 100 w/t parts of negative electrode carbon material. If the thermoplastic resin is 10 w/t parts or less, low degree of impregnation decreases the effect of decreasing the reaction activity. Meanwhile, if the thermoplastic resin is 100 w/t parts or more, particles are fused and bound through heat treatment. This requires another milling process, leading to low productivity. In this way, the low-crystalline carbon impregnated carbon material for lithium-ion secondary battery negative electrode is obtained.

The following describes a negative electrode plate and a lithium-ion secondary battery of the embodiment of the present invention.

The negative electrode plate of this embodiment is prepared by: kneading the above negative electrode carbon material with an organic binding agent and a solvent to form a paste-like negative electrode mixture; applying the mixture to a current collector to integrate the mixture with the current collector.

The organic binding agent may be, for example, polyvinylidene fluoride, polyethylene, polypropylene, styrene-butadiene rubber, or the like. The current collector may be foil or a mesh of copper or nickel, for example. The solvent is not particularly limited, but for example, may be water, propanol, N-methyl-2-pyrrolidone, dimethylformamide, dimethylacetamide, or the like. In the integration process, a molding technique such as roller press may be used.

The lithium-ion secondary battery of this embodiment is produced by: arranging (i) a positive electrode made of an oxide containing lithium and (ii) the above-described negative electrode plate with a separator interposed between the positive and negative electrodes; and immersing these electrodes into an electrolytic solution.

There is no limitation on a positive electrode material. For the positive electrode material, LiCoO₂, LiNiO₂, LiMn₂O₄, or the like may be used singly, in combination, or in a form or mixture. The separator may be, for example, nonwoven fabric, cloth, or microporous film, mainly based on polyolefin such as polyethylene, polypropylene, or the like. The electrolytic solution may be a mixture of (i) cyclic carbonate such as ethylene carbonate and propylene carbonate, and (ii) chain carbonate such as dimethyl carbonate, diethyl carbonate, and ethyl methyl carbonate, the mixture having LiClO₄, LiPF₆, LiAsF₆, LiBF₄, LiSO₃CF₃, or the like as a supporting electrolyte. Alternatively, gel-like polymer electrolyte may be used.

Since the lithium-ion secondary battery of this embodiment uses the negative electrode plate made of the above-described negative electrode carbon material and the like, the lithium-ion secondary battery has less possibility of generating gas, and has an excellent charge/discharge performance and cycling performance, compared with a lithium-ion secondary battery using a negative electrode made of conventional carbon powder.

### Examples

The present invention will be detailed with reference to the following Examples.

### (Example 1)

To 100 w/t parts of petroleum coke having a controlled average particle size of 8 µm, 50 w/t parts of synthetic pitch tar was added as a binder and kneaded at a temperature of 200°C. Then, the obtained mixture was controlled so as to have an average particle size of 400 µm or less, and subsequently was molded into a block by means of cold isostatic pressing at a pressure of 900 kgf/cm². Then the molded article was put into a baking furnace to be heat treated under a non-oxidation atmosphere at a temperature of about 1000°C, and then was graphitized at a temperature of 2800°C. The thus graphitized block was milled. Then, through particle size control, powder (negative electrode carbon material) having an average particle size of 24.8 µm was obtained. The particle size control was carried out using an air classifier, and the maximum particle size was set to 96.0 µm.

To the thus obtained negative electrode carbon material, 10 w/t % of polyvinylidene fluoride (PVdF) was added as a binding agent, and then kneaded with N-methyl-2-pyrrolidone. Then, the resulting material was applied to copper foil having a thickness of 10 µm, and then subjected to vacuum drying at a temperature of 135°C for five hours. After drying, the coating was pressurized using roller press to obtain a negative electrode plate having a mixture density of 1.3 g/cm³. This negative electrode plate was used to produce typical triode cells in each of which lithium metal was disposed as a counter electrode with a separator interposed between the negative electrode plate and the counter electrode. As electrolytic solutions for the cells, respectively used are: 3: 7 volume ratio of ethylene carbonate (EC) / dimethyl carbonate (DMC), containing 1 mol/L of LiPF₆; and 3:1 volume ratio of ethylene carbonate (EC) / propylene carbonate (PC), containing 1 mol/L of LiPF₆.

Using these triode cells, charge/discharge performance was evaluated. Whether or not gas is generated was examined using the triode cell whose electrolytic solution was 3: 1 volume ratio of ethylene carbonate (EC) / propylene carbonate (PC), containing 1 mol/L of LiPF. A first cycle coulombic efficiency of this cell was calculated from a first cycle charge/discharge capacity, ( i.e., by dividing a first cycle discharge capacity by a first cycle charge capacity) . A cell having a first cycle coulombic efficiency of 80% or less was regarded as generating gas, while a cell having a first cycle coulombic efficiency exceeding 80% was regarded as not generating gas. In the mean time, rapid charge/discharge performance was evaluated using the triode cell whose electrolytic solution was 3 : 7 volume ratio of ethylene carbonate (EC) / dimethyl carbonate (DMC), containing 1 mol/L of LiPF₆. After the cell was charged and discharged with 0.2 C in the first to fourth cycles, the cell was charged with 4 C in the fifth cycle, and the capacity charged until potential reached 4 mV was measured.

### (Example 2)

A graphitized block was obtained from the same materials and through the same processes as Example 1, except that 75 w/t parts of petroleum coke and 25 w/t parts of artificial graphite powder were used instead of 100 w/t parts of petroleum coke of Example 1. Through milling of this graphitized block and particle size control, powder having an average particle size of 22.6 µm and a maximum particle size of 62.2 µm was obtained. As is in Example 1, a negative electrode plate and triode cells were produced and tested.

### (Example3)

Powder was obtained in the same manner as Example 1, except that: 100 w/t parts of raw pitch coke was used instead of 100 w/t parts of petroleum coke of Example 1; the amount of binder was changed to 60 w/t parts, and final graphitization temperature was set to 2400°C. The obtained powder after milling and particle size control had an average particle size of 23.3 µm and a maximum particle size of 74.0µm. Using this powder, a negative electrode plate and triode cells were produced and tested, as in Example 1.

### (Example 4)

Powder was obtained in the same manner as Example 1, except that 75 w/t parts of pitch coke and 25 w/t parts of soot were used instead of 100 w/t parts of petroleum coke of Example 1. The obtained powder after milling and particle size control had an average particle size of 25. 6 µm, and a maximum particle size of 74.0 µm. Using this powder, a negative electrode plate and triode cells were produced and tested, as in Example 1.

### (Example 5)

A graphitized block was obtained in the same manner as Example 1, except that the final graphitization temperature was set to 2900°C. Then, through milling of this block and particle size control, powder was obtained. Then, 100 w/t parts of powder thus obtained was dry blended with 30 w/t parts of polyvinyl alcohol and then baked at a temperature of 1000°C. Through milling of the resulting baked article and particle size control, there was obtained powder impregnated and coated with low-crystalline carbon. The powder has an average particle size of 27.1 µm and a maximum particle size of 88.0 µm. Using this powder, a negative electrode plate and triode cells were produced and tested, as in Example 1.

### (Example 6)

Powder having an average particle size of 53.5 µm and a maximum particle size of 88.0 µm was obtained in the same processes as in Example 1, except that 100 w/t parts of coal-based needle coke was used instead of 100 w/t parts of petroleum coke of Example 1. Then, a negative electrode plate and triode cells were produced and tested, as in Example 1.

### (Comparative Example 1)

The petroleum coke (carbonaceous aggregate) used in Example 1, which has a controlled average particle size of 8 µm, was heat treated in a graphitization furnace at a temperature of 2800°C without further processing. Using the resulting powder, a negative electrode plate and triode cells were produced and tested, as in Example 1.

### (Comparative Example 2)

A negative electrode carbon material was obtained through molding, baking, and graphitization processes described in Example 1, except that an amount of the binder was changed to 45 w/t parts. A baked block for this negative electrode carbon material was fragile and difficult to be treated in the processes. After milling of this block and particle size control, a negative electrode plate and triode cells were produced and tested, as in Example 1.

### (Comparative Example3)

A negative electrode carbon material was obtained through molding, baking, and graphitization processes described in Example 2, except that an amount of the binder was changed to 20 w/t parts. A baked block for this negative electrode carbon material was fragile and difficult to be treated in the processes. After milling of this block and particle size control, a negative electrode plate and triode cells were produced and tested, as in Example 1.

### (Comparative Example 4)

A graphite block was obtained in the same manner as Example 5, except that the final graphitization temperature was set to 3000°C. Powder was obtained through milling of the graphite block and particle size control. Note that the impregnation and coating process with low-crystalline carbon was not performed. Then, a negative electrode plate and triode cells were produced and tested, as in Example 1.

### (Comparative Example 5)

A graphite block was obtained in the same manner as Example 5, except that the final graphitization temperature was set to 3000°C. Through milling of the graphite block and particle size control, powder having an average particle size of 4.7 µm was obtained. Note that the impregnation and coating process with low-crystalline carbon was not performed. A negative electrode plate was produced following the processes described in Example 1. However, a large amount of binder was needed, and a homogeneous negative electrode plate could not be produced. Accordingly, battery performance could not be evaluated.

### (Comparative Example 6)

A graphite block was obtained in the same manner as Example 5, except that the final graphitization temperature was set to 3000°C. Through milling of the graphite block and particle size control, powder having an average particle size of 61.8 µm was obtained. Note that the impregnation and coating process with low-crystalline carbon was not performed. A negative electrode plate was produced following the processes described in Example 1 . However, the surface of the electrode had a number of streaks because of the large particle size, and a homogeneous negative electrode plate could not be produced. Accordingly, battery performance could not be evaluated.

Table 1 represents the characteristic values and results of charge/discharge tests for the negative electrode carbon materials used in the above Examples 1 to 6 and Comparative Examples 1 to 6.

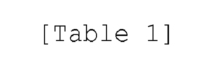

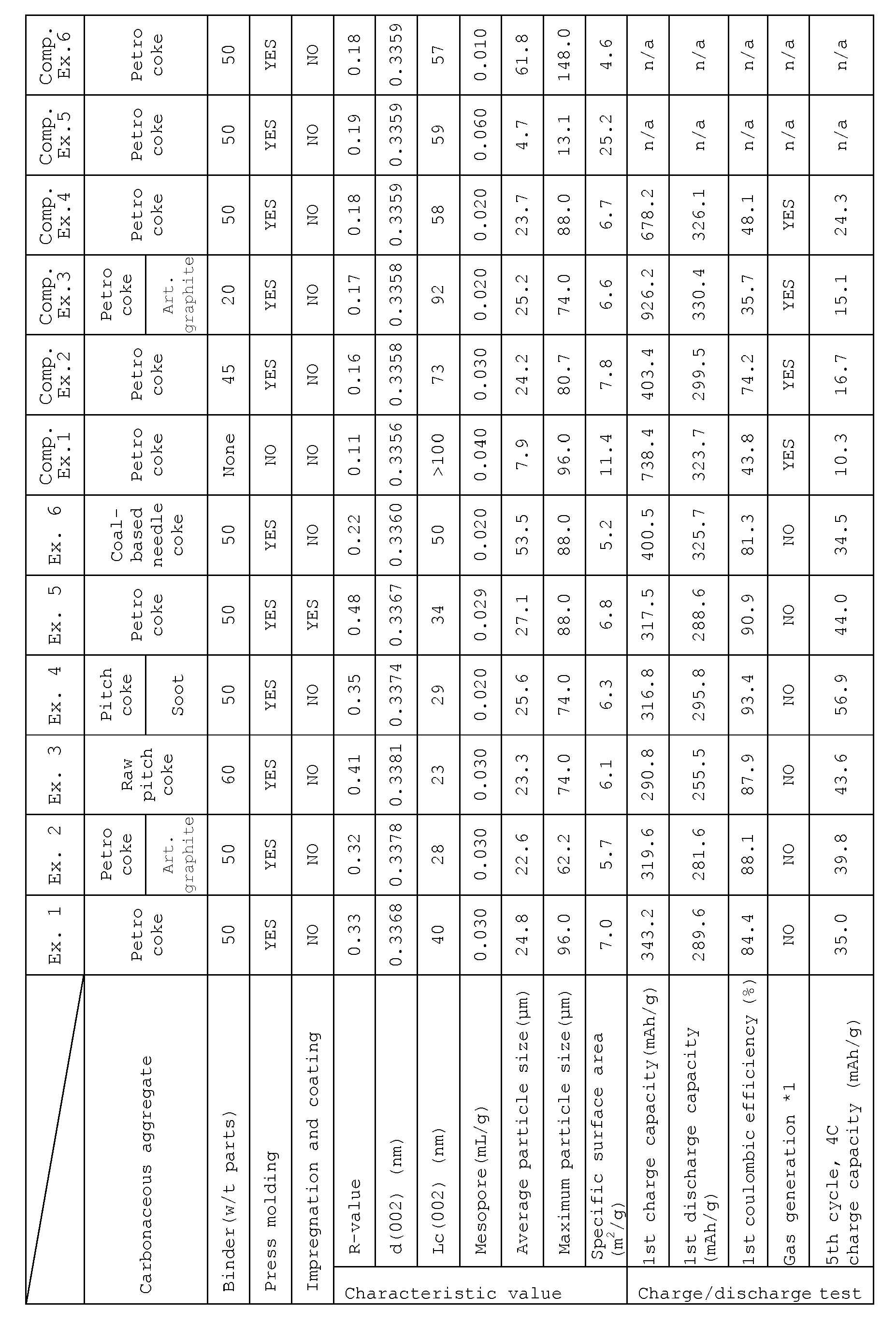

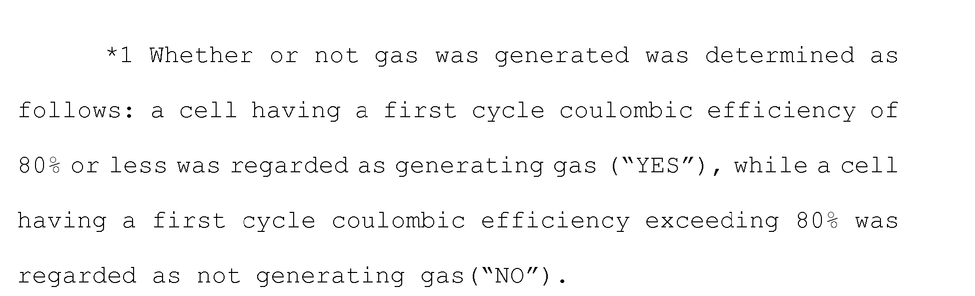

As clearly seen from Table 1, the use of the carbon material for lithium-ion secondary battery negative electrode of the present invention is beneficial in that: a large amount of lithium is absorbed and stored at a time of rapid charge; and gas generation in a first charge/discharge cycle is restrained even if an electrolytic solution contains propylene carbonate. In addition, the low-crystalline carbon impregnated carbon material for lithium-ion secondary battery negative electrode of the present invention realizes a first charge/discharge cycle with much less gas generation compared with the case of the above-mentioned negative electrode carbon material, and also provides a rapid charge/discharge.

Note that various design variations can be made in the present invention without departing from the scope of the claims, and the present invention is not limited to the above-described embodiment or Examples.

## Claims

1. A carbon material for lithium-ion secondary battery negative electrode obtained by: blending and kneading a carbonaceous aggregate with a binder to form a composition; press molding the composition into an article; carbonizing the press molded article; graphitizing the article to obtain an artificial graphite block; milling the block; and carrying out particle size control, the carbon material has characteristics of:
(1) R-value = (I₁₃₆₀/I₁₅₀₀) ≥0.2, where R-value is defined by the ratio of D band to G band in Raman spectrum using Nd: YAG laser light of 532 nm wavelength; and
(2) d(002) ≥ 0.336 nm, and Lc(002) ≤ 50 nm, where d(002) and Lc(002) are crystallographic parameters calculated by Gakushin-method.

2. The carbon material according to claim 1, wherein an amount of the binder is 50 w/t parts or more with respect to 100 w/t parts of carbonaceous aggregate.

3. The carbon material according to claim 1, wherein the press molded article is obtained through cold isostatic pressing.

4. The carbon material according to any one of claims 1 to 3, wherein a compound which catalyzes graphitization is not contained.

5. The carbon material according to any one of claims 1 to 3, wherein mesopore volume defined by IUPAC is 0.03 mL/g or less, which mesopore is obtained by analyzing a nitrogen adsorption-desorption isotherm at 77K using BJH method.

6. The carbon material according to any one of claims 1 to 3, wherein the carbonaceous aggregate contains coal-based calcined coke, petroleum-based calcined coke, or raw coke.

7. The carbon material according to claim 6, wherein the coal-based calcined coke is constituted of plural types of coal-based calcined coke.

8. The carbon material according to claim 6, wherein the petroleum-based calcined coke is constituted of plural types of petroleum-based calcined coke.

9. The carbon material according to claim 6, wherein the raw coke is constituted of plural types of raw coke.

10. The carbon material according to any one of claims 1 to 3, wherein the carbonaceous aggregate contains artificial graphite or natural graphite.

11. The carbon material according to any one of claims 1 to 3, wherein an average particle size is 5 µm to 60 µm, and a maximum particle size is 100 µm or less.

12. The carbon material according to any one of claims 1 to 3, wherein a specific surface area is 20 m²/g or less.

13. A low-crystalline carbon impregnated carbon material for lithium-ion secondary battery negative electrode obtained by impregnating the carbon material recited in claim 1 with a thermoplastic resin so that pores of the material are filled with the resin, and carbonizing the impregnated material.

14. The low-crystalline carbon impregnated carbon material according to claim 13, wherein a mesopore volume defined by IUPAC is 0.029 mL/g or less, which mesopore is obtained by analyzing a nitrogen adsorption-desorption isotherm at 77K using BJH method.

15. The low-crystalline carbon impregnated carbon material according to claim 13 or 14, wherein the material has characteristics of:
(1) R-value = (I₁₃₆₀/I₁₅₈₀) ≥ 0.2, where R-value is defined by the ratio of D band to G band in Raman spectrum using Nd:YAG laser light of 532 nm wavelength; and
(2) d(002) ≥ 0.336nm, and Lc(002) ≤ 50 nm, where d(002) and Lc(002) are crystallographic parameters calculated by Gakushin-method.

16. A negative electrode plate formed by applying, to a current collector, a mixture of the carbon material recited in claim 1 and a resin binder.

17. A negative electrode plate formed by applying, to a current collector, a mixture of the low-crystalline carbon impregnated carbon material recited in claim 13 and a resin binder.

18. A lithium-ion secondary battery comprising a negative electrode plate recited in claim 16 or 17.
